(19) Europäisches Patentamt
European Patent Office
Office européen des brevets

(11) Numéro de publication : **0 465 453 A1**

# (12) DEMANDE DE BREVET EUROPEEN

(21) Numéro de dépôt : **91870104.6**

(22) Date de dépôt : **28.06.91**

(51) Int. Cl.⁵ : **E04H 4/16**

(30) Priorité : **02.07.90 BE 9000671**

(43) Date de publication de la demande :
**08.01.92 Bulletin 92/02**

(84) Etats contractants désignés :
**AT CH DE DK ES FR GB GR IT LI LU NL SE**

(71) Demandeur : **SÜNNEN, Jean Albert François**
**29, rue de Grady**
**B-4050 Chaudfontaine (BE)**

(72) Inventeur : **SÜNNEN, Jean Albert François**
**29, rue de Grady**
**B-4050 Chaudfontaine (BE)**

(74) Mandataire : **Dellicour, Paul**
**Office de Brevets E. Dellicour rue Fabry 18/012**
**B-4000 Liège (BE)**

(54) **Perfectionnement aux robots de service.**

(57) Dans le robot de service, équipé d'au moins deux roues (9,10) ou chenilles (7,8) motrices indépendantes munies chacune d'un système de détection d'obstacles assurant par relais (25) l'inversion du sens de rotation d'une des roues (9,10) ou chenilles (7,8) motrices, l'inversion du sens de rotation d'une roue (9,10) ou chenille (7,8) est provoqué par son relais (25) durant un temps variable et aléatoire, afin de réaliser un pivotement du robot suivi de son retour en déplacement rectiligne vers l'avant. Les relais (25) commandant chacun l'inversion du sens de rotation d'un moteur de translation sont du type Reed, actionnés par un champ magnétique extérieur produit par le détecteur d'obstacles.

EP 0 465 453 A1

FIG.5

La présente invention est relative à un système de déplacement d'un véhicule destiné à effectuer automatiquement certaines tâches.

De tels engins, encore appelés robots de service, sont souvent amenés à réaliser des travaux d'inspection, de surveillance, de manipulation de matières dangereuses dans un milieu hostile tel que l'enceinte d'un réacteur nucléaire, le périmètre d'une raffinerie ou encore de conduire des opération de nettoyage en immersion, par exemple dans une piscine ou une citerne de transport ou de stockage de produits chimiques.

Ces robots doivent pouvoir se déplacer au sol avec franchissement d'obstacles, parfois même des escaliers, mais doivent également se déplacer sur des pentes à forte déclivité ou sur des surfaces verticales que l'on rencontre dans les fosses de plongée de certaines piscines ou dans certaines cuves.

On connaît des dispositifs de nettoyage automatique de piscines, tels que celui décrit au brevet US-A-3 551 930, dans lequel un chariot équipé d'un moteur électrique et d'une pompe se déplace au hasard sur le fond. Dès qu'il rencontre un obstacle ou une paroi, un système mécanique compliqué l'amène à reculer en pivotant pour l'envoyer ensuite dans une autre direction.

Un système mécanique de ce genre est très lourd, ne se prête ni à l'automatisation ni à la programmation, est d'un coût élevé et d'un rendement médiocre par suite de la complexité mécanique de l'ensemble.

On a cherché à remédier à ces inconvénients en faisant usage d'un moteur distinct pour la translation et, au lieu de laisser le véhicule se déplacer au hasard, on lui fait effectuer un mouvement de va-et-vient entre les parois de la piscine. Afin d'éviter que l'engin ne décrive à l'aller et au retour la même trajectoire, on le fait pivoter légèrement lorsqu'il touche une paroi.

Les brevets US-A-4 168 557 et US-A-2 988 762 décrivent des dispositifs mécaniques, qui dévient légèrement le véhicule lorsqu'il rencontre une paroi.

Dans le premier cas, cet effet est obtenu en munissant l'engin d'un flotteur décentré ; cependant, l'action de ce flotteur se modifie au fur et à mesure que la flottabilité de l'engin change en fonction du poids de détritus accumulés dans les filtres.

Dans le second cas le charriot est muni de tiges coulissantes, qui actionnent un relais inversant le sens de rotation du moteur de translation. On constate cependant que de tels dispositifs présentent un fonctionnement irrégulier, en particulier si l'obstacle rencontré n'est pas une surface plane ou n'est pas suffisamment large pour agir sur les deux tiges simultanément.

De plus, si le chariot aborde la paroi plane sous un angle de 90° ou s'il s'engage dans un dièdre exactement selon la bissectrice de l'angle, il n'y a pas pivotement et le chariot décrit un mouvement de va-et-vient en restant toujours sur la même trajectoire.

Le système de déplacement selon l'invention remédie à ces inconvénients et constitue une solution simple, fiable, souple et économique au problème du déplacement d'un robot de service, que ce déplacement soit au hasard avec évitement automatique des obstacles ou qu'il soit par guidage à distance ou encore qu'il soit programmé.

Un robot de service, équipé d'au moins deux roues ou chenilles motrices indépendantes munies chacune d'un système de détection d'obstacle assurant par relais l'inversion du sens de rotation d'une des roues ou chenilles motrices, est caractérisé suivant l'invention en ce que cette inversion du sens de rotation d'une roue ou chenille est provoquée par son relais durant un temps variable et aléatoire, afin de réaliser un pivotement du robot suivi de son retour en déplacement rectiligne vers l'avant.

Suivant l'invention les relais, commandant chacun l'inversion du sens de rotation d'un moteur de translation sont du type Reed, actionnés par un champ magnétique extérieur produit par le détecteur d'obstacles.

Suivant l'invention encore, un relais Reed est ramené dans sa position initiale par une variation du champ magnétique provoquée par un signal provenant de la roue ou de la chenille proche dudit relais.

L'invention est décrite ci-après avec plus de détails sur la base des dessins annexés, à titre d'exemples uniquement, représentant en :

Figure 1 une vue en élévation de profil d'un robot de service destiné au nettoyage de cuves ou de piscines en immersion ;

Figures 2 et 3 respectivement une vue de face et une vue en plan du robot de figure 1 ;

Figure 4 une vue en élévation du coffret d'alimentation en énergie ;

Figure 5 une vue en plan du robot en approche d'une paroi de cuve ou piscine ;

Figures 6 et 7 une vue partielle respectivement de profil et en plan du robot muni d'une brosse ;

Figure 8 une variante du logement de la brosse en vue de profil ;

Figures 9 et 10 une variante de réalisation d'un robot de service respectivement dans une vue de profil et dans une vue en plan ;

Figure 11 une autre variante d'un robot de service à quatre roues motrices dans une vue en plan.

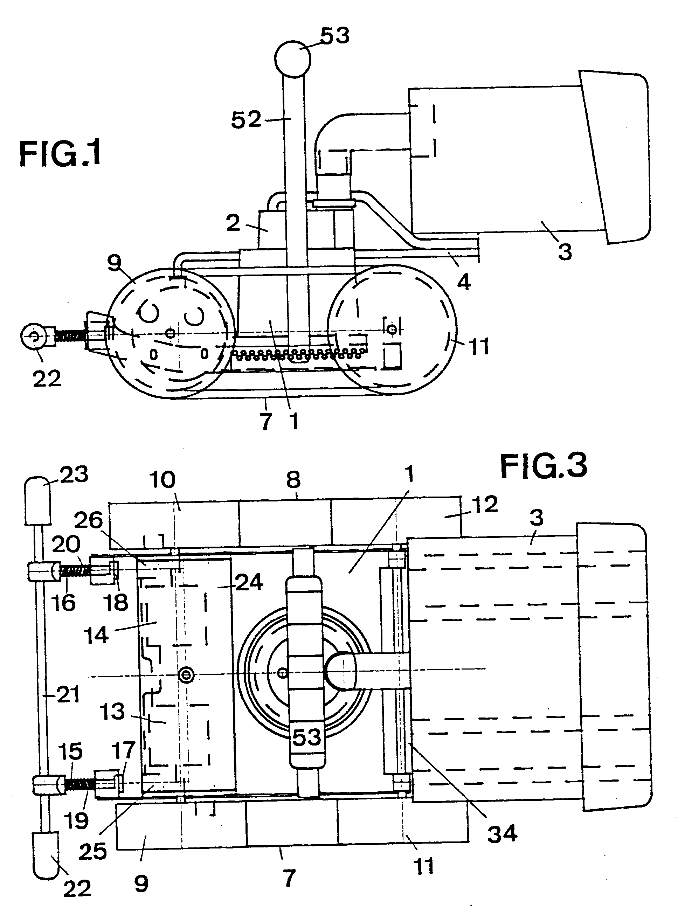

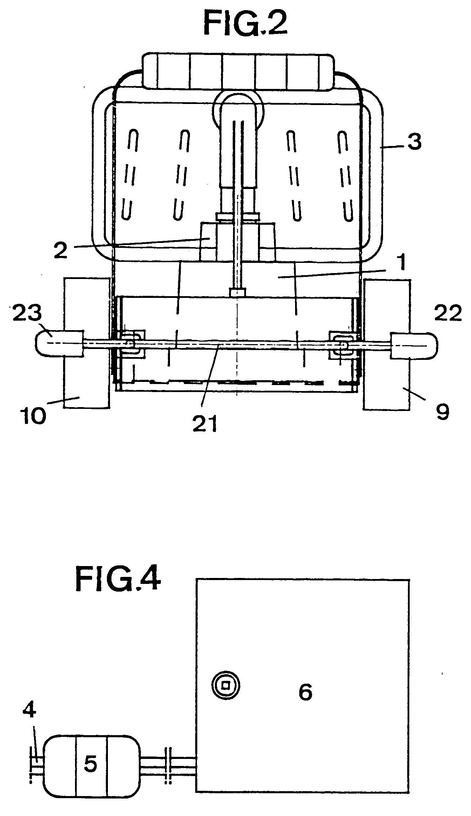

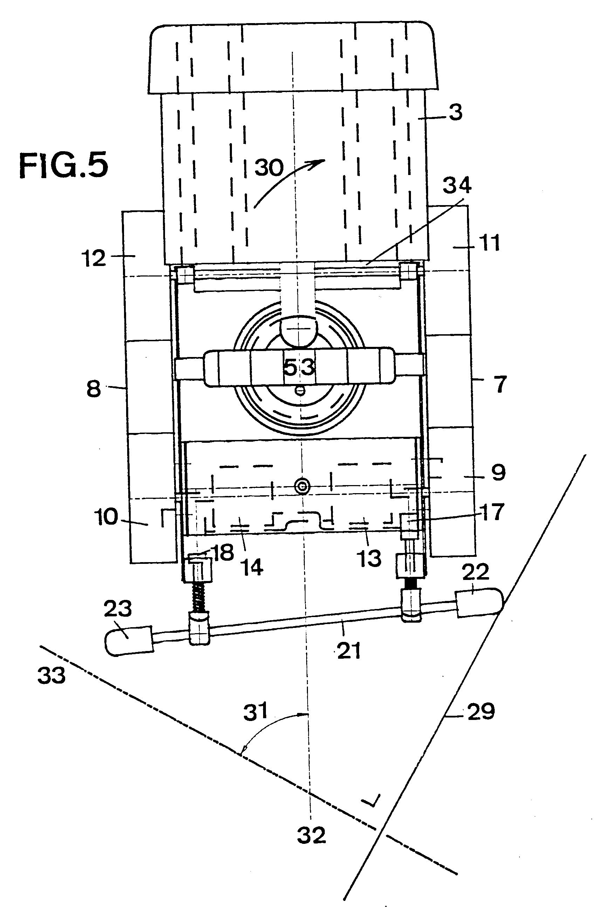

Dans le robot représenté aux figures 1 à 3 la base 1 supporte une pompe électrique 2 et un filtre 3. Un câble électrique 4 muni de flotteurs 5 assure l'alimentation en énergie à partir d'un coffret 6. (figure 4). Le robot de service se déplace sur deux chenilles 7,8 actionnées par des roues motrices crantées 9, 10, les roues arrières 11,12 n'étant pas dans cet exemple motorisées.

Les roues motrices 9,10 sont entraînées chacune par un motoréducteur 13, respectivement 14. La base 1 du robot est munie à l'avant de deux tiges coulissantes 15,16 supportant chacune un aimant permanent 17, respectivement 18 et munies chacune d'un ressort de rappel 19, respectivement 20.

Dans l'exemple représenté ces deux tiges 15,16 sont reliées par une barre 21 munie de deux embouts 22, 23.

Dans cet exemple les motoréducteurs n'étant pas du type étanche sont montés dans un boîtier étanche 24 réalisé en matériau non magnétique. On dispose dans ce boîtier 24, à proximité des roues motrices 9,10 et en face des aimants 17, 18, portés par les tiges coulissantes 15, 16 deux relais du type Reed représentés en 25,26.

Chacune des roues motrices 9,10 est en matériau non magnétique et pourvue d'un petit aimant permanent 27, respectivement 28 fixé sur sa face intérieure.

Lorsque le robot de service s'approche d'une paroi 29 de cuve ou piscine (figure 5), l'aimant permanent 17, porté par la tige de gauche 15, coulisse vers le relais 25, qui est actionné par le champ magnétique et de ce fait inverse le sens de rotation du moteur de droite 14. Le robot exécute alors un mouvement de rotation dans le sens de la flèche 30, durant lequel le ressort de rappel 19 ramène l'aimant 17 dans sa position de repos. Durant ce temps, la roue motrice de gauche 9 en tournant amène l'aimant permanent 27 en face du relais 25, qui se remet dans sa position de départ en rétablissant le sens de rotation normal du moteur de droite 14. Le robot repart vers l'avant en suivant une trajectoire rectiligne.

Dans cet exemple le relais de gauche 25 agit sur le moteur de droite 14 et le relais de droite 26 sur le moteur de gauche 13, ce qui amène le robot à pivoter en augmentant l'angle 31 formé entre son axe 32 et la normale 33 à la paroi rencontrée 29. Rien n'interdit cependant de faire agir le relais de gauche 25 sur le moteur de gauche 13 et le relais de droite 26 sur le moteur de droite 14, ce qui amène le robot perpendiculairement à la paroi 29 avant qu'il ne se dégage en reculant puis en pivotant.

Le temps durant lequel le relais 25 (ou 26) inverse le sens de rotation du moteur qu'il commande, est uniquement fonction du temps qui s'écoule entre sa mise en action par l'aimant 17 (ou 18) porté par sa tige coulissante et le retour à sa position normale sous l'action de l'aimant 27 (ou 28) porté par la roue motrice à proximité immédiate du relais. Afin d'assurer une marche normale vers l'avant les roues ou chenilles peuvent être synchronisées par exemple par un axe 34 reliant les deux roues arrières 11, 12, équipées d'un système de roue libre permettant l'inversion du sens de marche.

Il arrive fréquemment qu'un robot de service éprouve des difficultés lors d'un franchissement d'obstacle ou d'arête et il est alors fait usage, de manière connue en soi, de rouleaux motorisés à l'avant ou à l'arrière ou d'une brosse rotative motorisée par le système de translation principal.

On peut de la même façon faire usage de moyens connus, tels que des galets crantés appliqués par des ressorts sur le brin inférieur de la courroie, ce qui permet à celle-ci d'épouser les aspérités du terrain et en particulier lors du franchissement d'arêtes.

Le robot de service représenté aux dessins est normalement équipé de la pompe 2 et d'un sac ou d'un filtre à cartouche (non représenté).

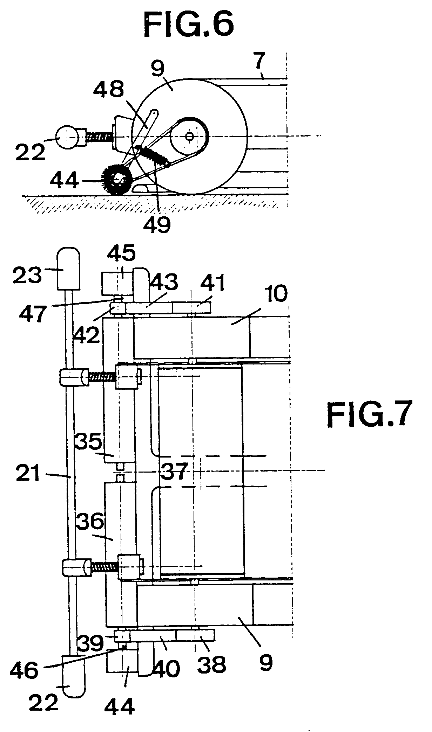

On a représenté en figures 6 et 7 le robot équipé d'une brosse constituée de deux demi-brosses 35,36. La pompe 2 (non représentée ici) aspire les détritus détachés à la périphérie de la brosse par une buse 37. Les demi-brosses 35, 36 sont actionnées par les roues 9,10 par l'intermédiaire respectivement de pignons 38, 39 et de la courroie ou chaînette 40 pour la demi-brosse 35 et de pignons 41 et 42 et de la courroie ou chaînette 43 pour la demi-brosse 36.

Les deux demi-brosses 35,36 peuvent ainsi être actionnées en sens inverse l'une de l'autre, lorsque le robot pivote et que les roues 9,10 tournent en sens inverse l'une de l'autre.

La buse d'aspiration 37 est prévue plus large que le châssis du robot et la brosse 35,36 est utilement pourvue de brosses auxiliaires 44, 45, accouplées de préférence de façon flexible à ladite brosse principale 35, 36 par des axes flexibles 46, respectivement 47.

Chaque demi-brosse 35, 36 est reliée au robot par un ou deux bras pivotants 48, permettant d'appliquer par un ressort 49 la brosse avec une pression réglable sur le fond de la cuve ou piscine.

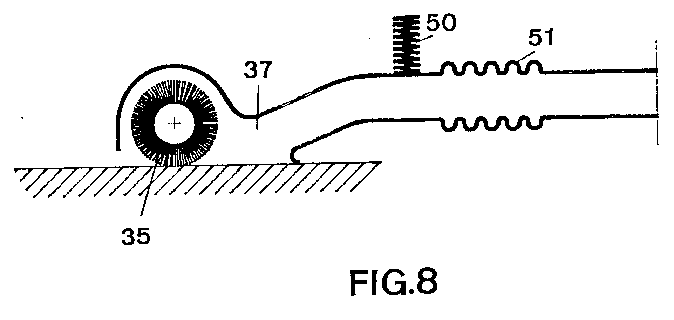

Dans l'exemple représenté en figure 8 les demi-brosses 35, 36 sont logées à l'intérieur de la buse d'aspiration 37. Cette dernière est réalisée en un matériau souple, tel qu'un caoutchouc, et appliquée avec une pression réglable sur le fond à l'avant du robot à l'aide d'un ressort 50. Elle est reliée à la pompe d'aspiration 2 (non représentée ici) de façon souple par un joint 51.

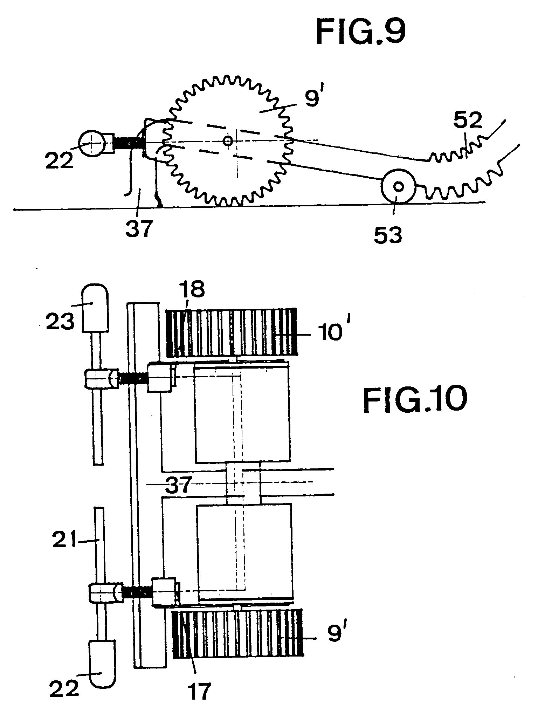

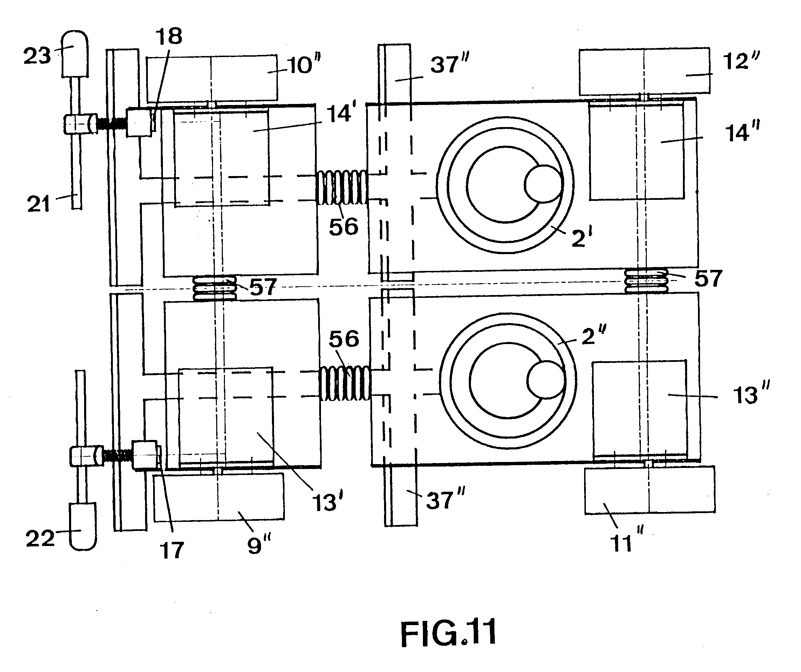

Dans une variante simplifiée du robot de service (figures 9 et 10), celui-ci est équipé de deux roues motrices crantées 9', 10', d'une buse d'aspiration 37' reliée par un tube flexible 52 à la pompe du circuit de filtration d'une piscine située en dehors de celle-ci. Le tube flexible 52 est utilement muni d'une ou plusieurs roulettes 53.

Dans cet exemple les deux roues 9',10' peuvent être reliées à la buse 37' par deux pièces élastiques 54, 55 facilitant le travail dans un dièdre.

Dans une autre variante du robot de service (figure 11), celui-ci est munie de quatre roues motrices 9", 10", 11", 12", montées sur un châssis articulé ou souple, et de quatre buses d'aspiration 37 indépendantes et souples tant à l'avant qu'à l'arrière et à gauche comme à droite, ce qui permet de travailler dans un dièdre ou sur un escalier. Les moteurs, 13', 13", d'une part, et 14', 14", d'autre part, sont commandés par le même relais. Le robot est muni de deux pompes et son châssis est articulé en 56 et 57.

Toutes ces variantes du robot de service peuvent, bien entendu, être munies d'une série d'accessoires connus, tels que grille et piège à corps étrangers durs, évitant l'introduction dans la pompe de pierres ou objets métalliques divers, dispositif à lame tournante ou à fil tournant déchiquetant les feuilles et fibres végétales, et encore réceptacle destiné à recevoir une pastille de chlore, etc.

Bien que le robot, normalement construit en alliage léger ou en plastique, soit extrêmement léger, il est avantageusement muni de flotteurs 58 (figure 1) placés de préférence sur un arceau pivotant 59, ce qui facilite le déplacement sur les pentes ou les parois verticales.

Un tel robot de service peut aussi être muni d'une série d'accessoires ou moyens connus destinés à améliorer son fonctionnement. La barre détectrice 21 (figures 1 à 3) peut être réglable en hauteur et ses embouts 22, 23 peuvent être constitués par des roulettes et des ressorts plus ou moins durs, de façon à permettre au robot de se déplacer le long d'une paroi en se guidant de moteurs non étanches fonctionnant dans l'eau. Le robot peut également faire usage à l'avant de deux galets crantés supplémentaires facilitant le passage de la position horizontale à la position verticale, lorsque par exemple le robot doit gravir les marches d'un escalier.

Dans une version améliorée du robot de service il est prévu d'équiper le coffret de contrôle de moyens électriques appropriés, afin de permettre à l'opérateur de choisir entre le fonctionnement automatique décrit ci-dessus et le fonctionnement manuel, où l'opérateur peut à distance corriger la trajectoire du robot et l'envoyer vers les zones les plus sales. Ce dispositif permet de réaliser un gain de temps considérable suivant les circonstances.

Enfin, dans sa version programmable le robot de service tel que décrit ci-dessus peut à chaque passage au-dessus d'une balise magnétique ou autre situer exactement sa position et suivre jusqu'à une prochaine balise une trajectoire programmée. Lorsque le programme arrive à son terme, le robot est amené à son point de sortie, une injection d'air comprimé le ramène à la surface de la piscine et le robot peut sortir par ses propres moyens.

Lorsque le robot de service effectue des inversions de sens de marche répétées et irrégulières, il peut se produire une torsion du câble d'alimentation. Pour éviter cet inconvénient le robot comporte des éléments de contrôle, qui comptabilisent le nombre et la durée des inversions de sens de marche à gauche et à droite, en calculent l'écart et ramènent cet écart à zéro après un intervalle de temps déterminé.

Pour empêcher que le robot ne soit bloqué sur place par un obstacle imprévisible, il est prévu suivant l'invention un dispositif temporisé agissant à intervalle de temps régulier pour provoquer une inversion du sens de marche des deux moteurs suivi d'une opération de pivotement angulaire et d'une remise en marche vers l'avant, le pivotement angulaire s'effectuant alternativement à gauche et à droite.

On peut naturellement prévoir une alimentation électrique autonome du robot de service mais chaque fois que cela est possible on préfère pour des raisons d'encombrement et de poids alimenter le robot par un câble, ce qui facilite également beaucoup le guidage à distance. Pour les robots de service travaillant en immersion on fera, de manière connue, usage d'un câble flottant et plat éventuellement placé sur un enrouleur.

On a décrit ci-dessus à titre d'exemple l'utilisation d'un robot de service pour le nettoyage de piscines mais il est évident que les dispositifs décrits peuvent être utilisés pour bien d'autres tâches, telles que par exemple le nettoyage de sols et tapis, le déplacement de moyens de détection et de surveillance et l'inspection dans des endroits difficilement accessibles ou dangereux.

## Revendications

1. Robot de service, équipé d'au moins deux roues ou chenilles motrices indépendantes munies chacune d'un système de détection d'obstacles assurant par relais l'inversion du sens de rotation d'une des roues ou chenilles motrices, caractérisé en ce que l'inversion du sens de rotation d'une roue ou chenille est provoqué par son relais durant un temps variable et aléatoire, afin de réaliser un pivotement du robot suivi de son retour en déplacement rectiligne vers l'avant.

2. Robot de service suivant la revendication 1, caractérisé en ce que les relais commandant chacun l'inversion du sens de rotation d'un moteur de translation sont du type Reed, actionnés par un champ magnétique extérieur produit par le détecteur d'obstacles.

3. Robot de service suivant la revendication 1, caractérisé en ce que les relais, commandant chacun l'inversion du sens de rotation d'un moteur de translation, sont du type Reed, actionnés par un champ magnétique extérieur produit par le passage d'un courant électrique dans une bobine disposée à proximité.

4. Robot de service suivant la revendication 2, caractérisé en ce qu'un relais Reed est ramené dans sa position initiale par une variation du champ magnétique provoqué par un signal provenant de la roue ou de la chenille proche dudit relais.

5. Robot de service suivant la revendication 4, caractérisé en ce que le signal est provoqué par un ou plusieurs aimants (17,18) permanents portés par ladite roue ou chenille (9,10) proche du relais.

6. Robot de service suivant l'une quelconque des revendications 1 à 5, caractérisé en ce qu'il est équipé à l'avant d'une brosse constituée de deux demi-brosses (35, 36), mises en mouvement par les roues motrices (9,10) chacune dans le même sens de rotation que celui de sa roue correspondante.

7. Robot de service suivant la revendication 6, caractérisé en ce que les demi-brosses (35, 36) sont logées à l'intérieur d'une buse d'aspiration (37) appliquée avec une pression réglable sur le fond.

8. Robot de service suivant l'une quelconque des revendications 1 à 7, caractérisé en ce qu'il est équipé d'une buse d'aspiration (37') reliée par un tube flexible (52) à une pompe située en dehors de la cuve ou piscine.

9. Robot de service suivant l'une quelconque des revendications 1 à 7, caractérisé en ce qu'il comporte un châssis articulé (en 56, 57) ou souple avec quatre roues motrices (9″,10″,11″,12″) et quatre buses d'aspiration indépendantes (37″), les deux moteurs de gauche (13', 13″) et respectivement les deux moteurs de droite (14', 14″) étant commandés par un même relais.

10. Robot de service suivant l'une quelconque des revendications 1 à 9, caratérisé en ce que la barre détectrice (21) est réglable en hauteur et ses embouts (22,23) sont constitués par des roulettes ou des ressorts plus ou moins durs.

11. Robot de service suivant l'une quelconque des revendications 1 à 10, caractérisé en ce que les roues ou chenilles gauche et droite (9,10 ou 11, 12 ou 7,8) sont synchronisées en marche avant par un axe (34) et équipées d'un système de roue libre permettant l'inversion du sens de marche d'une seule roue ou chenille.

12. Robot de service suivant l'une quelconque des revendications 1 à 11, caractérisé en ce que son coffret de contrôle est équipé de moyens électriques appropriés pour une commande manuelle.

13. Robot de service suivant l'une quelconque des revendications 1 à 11, caractérisé en ce qu'il est soumis à une trajectoire programmée par l'intermédiaire de balises magnétiques.

14. Robot de service suivant l'une quelconque des revendications 1 à 10, caractérisé en ce qu'il comporte des éléments de contrôle, qui comptabilisent le nombre et la durée des inversions de sens de marche à gauche et à droite, en calculent l'écart et ramènent celui-ci à zéro après un intervalle de temps déterminé, de manière à éviter la torsion du câble d'alimentation (4).

15. Robot de service suivant l'une quelconque des revendications 1 à 10, caractérisé en ce qu'il comporte un dispositif temporisé agissant à intervalle de temps réglable pour provoquer une inversion du sens de marche des deux moteurs suivi d'une opération de pivotement angulaire et d'une remise en marche vers l'avant, le pivotement angulaire s'effectuant alternativement à gauche et à droite.

**FIG.1**

**FIG.3**

# FIG.2

# FIG.4

# FIG.5

# FIG.6

# FIG.7

FIG.8

# FIG.9

# FIG.10

FIG.11

Office européen
des brevets

**RAPPORT DE RECHERCHE EUROPEENNE**

Numero de la demande

EP    91 87 0104

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3 892 282 (STANLEY S. WULK)<br><br>* colonne 3, ligne 24 - ligne 51 *<br>* colonne 5, ligne 21 - colonne 8, ligne 18 *<br>* colonne 9, ligne 59 - colonne 13, ligne 66 *<br>* colonne 14, ligne 66 - colonne 15, ligne 42 *<br>* colonne 15, ligne 61 - colonne 16, ligne 7; figures 1-7 *<br>--- | 1-8,<br>10-12,15 | E04H4/16 |
| D,A | US-A-3 551 930 (ROBERT R. MYERS)<br>* colonne 2, ligne 70 - colonne 4, ligne 45 *<br>* colonne 5, ligne 8 - colonne 6, ligne 29; figures 1-4,8-11 *<br>* figures 14-24 *<br>--- | 1 | |
| A | EP-A-257 006 (NYSTRÖM MIKAEL)<br>* page 6, ligne 8 - ligne 21; figures 1,2 *<br>--- | 6 | |
| A | US-A-4 749 478 (DAVID A. BROOKS)<br>* colonne 2, ligne 62 - colonne 3, ligne 2; figure 1 *<br>----- | 9 | **DOMAINES TECHNIQUES RECHERCHES (Int. Cl.5 )**<br><br>E04H |

Le présent rapport a été établi pour toutes les revendications

| Lieu de la recherche | Date d'achèvement de la recherche | Examinateur |
|---|---|---|
| LA HAYE | 12 SEPTEMBRE 1991 | BARBAS A. |